# EUROPÄISCHE PATENTSCHRIFT

(11) **EP 1 172 875 B1**
(45) Veröffentlichungstag und Bekanntmachung des Hinweises auf die Patenterteilung: **16.05.2007**
(21) Anmeldenummer: 01115249.3
(22) Anmeldetag: 23.06.2001
(51) Int. Cl.: H01M 8/06

(54) **Brennstoffzellensystem und Verfahren zum Betreiben des Brennstoffzellensystems**
Fuel cell system and method for operating
Système de pile à combustible et méthode de fonctionnement

(30) Priorität: 04.07.2000 DE 10032419
(43) Veröffentlichungstag der Anmeldung: 16.01.2002
(73) Patentinhaber: NuCellSys GmbH, 73230 Kirchheim/Teck-Nabern (DE)
(72) Erfinder: Derflinger, Monika, 73272 Neidlingen (DE); Mirsch, Dietmar, 73230 Kirchheim-Nabern (DE)
(74) Vertreter: Finkele, Rolf

(56) Entgegenhaltungen:
- EP-A- 0 598 530
- EP-A- 0 959 512
- DE-A- 19 807 878

## Beschreibung

Die Erfindung betrifft ein Brennstoffzellensystem sowie ein Verfahren zum Betreiben des Brennstoffzellensystems gemäß dem Oberbegriff der unabhängigen Ansprüche.

Aus der US 5,344,721 A1 ist ein PEM-Brennstoffzellensystem bekannt, bei dem Wasser im System zurückgewonnen wird, indem Produktwassser aus dem Kathodenabgas der Brennstoffzelle extrahiert und einem mitgeführten Reservoir wieder zugeführt wird. Dazu wird das rückgewonnene Wasser vor dem Einleiten in das Reservoir in einem Ionentauscher gereinigt, um die Leitfähigkeit des Wassers zu reduzieren, bevor dieses zur Kühlung in die Brennstoffzelle eingeführt wird.

Der Erfindung liegt die Aufgabe zugrunde, ein Brennstoffzellensystem mit einem verbesserten Wasserhaushalt anzugeben, sowie ein Verfahren zum Betreiben des Brennstoffzellensystems.

Diese Aufgabe wird bei einem Brennstoffzellensystem mit den Merkmalen des Anspruchs 1 und bei einem Verfahren zum Betreiben des Brennstoffzellensystems mit den Merkmalen des Anspruchs 5 gelöst.

Erfindungsgemäß ist in einem Brennstoffzellensystem zumindest eine Ionentauscher-Einheit in einem Strömungsweg, in welchem ein Gemisch aus Wasser und einem Brennmittel fließt, zwischen einem Kondensatabscheider und einem Gaserzeugungssystem angeordnet, welches zur Versorgung der Brennstoffzelleneinheit mit Wasserstoff vorgesehen ist.

Der Vorteil ist, daß bei einem Brennstoffzellensystem, welches mit einem Brennmittel wie vorzugsweise Kohlenwasserstoff oder einem Alkohol oder einem Ether betrieben wird, die Ionentauscher-Einheit zum Reinigen eines Gemischs von Wasser und dem Brennmittel verwendet werden kann, so daß eine Schädigung von Komponenten und Leitungen im Strömungsweg des Gemischs durch korrosives hochreines Wasser weitgehend vermieden werden kann, ebenso können schädliche Ablagerungen auf katalytischen Komponenten unterbunden werden.

Die Verwendung einer Ionentauscher-Einheit für ein Wasser/Brennmittelgemisch hat weiterhin zur Folge, daß diese vorteilhaft als sehr effizientes Mischer-Element wirkt und damit die Homogenität des Gemischs verbessert. Die Verwendung von Brennmitteln, welche als Zusatz in Wasser den Gefrierpunkt erniedrigen, ist besonders günstig, da damit ein Ausfrieren von Wasser im Brennstoffzellensystem bei niedrigen Außentemperaturen vermieden werden kann. Besonders günstig ist, daß beim Beaufschlagen der Ionentauscher-Einheit mit einem derartigen Gemisch auch ein Ausfrieren der Ionentauscher-Einheit unterbunden wird, welches die Ionentauscher-Einheit unbrauchbar machen kann.

Weitere Vorteile und Ausgestaltungen der Erfindung gehen aus den weiteren Ansprüchen und der Beschreibung hervor.

Die Erfindung ist nachstehend anhand einer Zeichnung näher beschrieben, wobei die Figur zeigt:

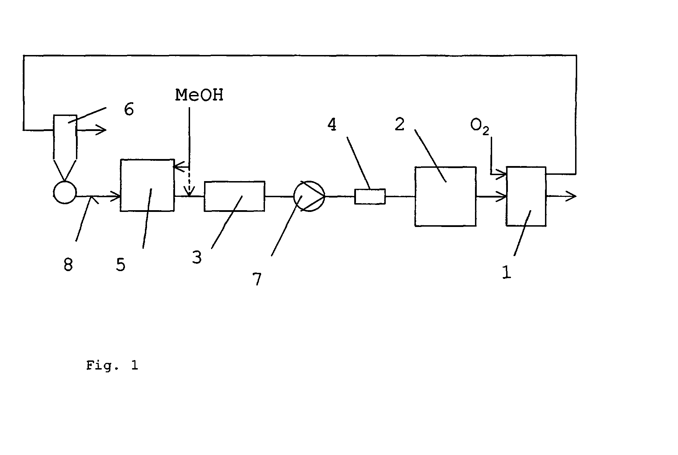

- Fig. 1: eine Prinzipdarstellung einer bevorzugten Vorrichtung zur Durchführung des Verfahrens.

Die Erfindung eignet sich besonders für Brennstoffzellensysteme in mobilen Einheiten wie etwa Brennstoffzellenfahrzeuge, ist aber auch für stationäre Systeme geeignet.

In Fig. 1 ist eine bevorzugte Anordnung in einem erfindungsgemäßen Brennstoffzellensystem dargestellt. Ein Gaserzeugungssystem 2 versorgt eine Brennstoffzelleneinheit 1, welche zumindest eine Brennstoffzelle aufweist, mit Wasserstoff. Ein bevorzugtes Brennmittel ist Methanol (MeOH). Auch andere Brennmittel wie Kohlenwasserstoffe, Ether, Alkohole können verwendet werden. Im Gaserzeugungssystem 2 wird aus dem Brennmittel Wasserstoff zum Betreiben der Brennstoffzelleneinheit 1 erzeugt und der Anode der Brennstoffzelleneinheit zugeführt.

Die Erfindung ist anhand eines mit Methanol betriebenen Brennstoffzellensystems beschrieben, soll aber nicht auf diese Ausführung beschränkt sein.

Im Gaserzeugungssystem 2 sind übliche, nicht dargestellte Komponenten wie Reformierungseinheit, Verdampfer, Kohlenmonoxid-Entfernungseinheit etc. zur Wasserstoffgewinnung aus Methanol und zur Brennstoffzellenabgas-Reinigung vorgesehen.

Ein Gemisch aus Methanol und Wasser, welches in einem Reservoir 5 bevorratet ist, wird durch eine Ionentauscher-Einheit 3 geleitet und dort von Verunreinigungen befreit. Die Ionentauscher-Einheit 3 übernimmt hier im Gegensatz zum Stand der Technik nicht die Funktion, die elektrische Leitfähigkeit des durchfließenden Mediums zu reduzieren, etwa eines wässrigen Kühlmediums für die Brennstoffzelleneinheit im Brennstoffzellensystem, da die Ionentauscher-Einheit 3 gemäß der Erfindung im Kreislauf des Brennmittels vorgesehen ist.

Vielmehr würde das Gaserzeugungssystem 2 selbst ausreichen, der Brennstoffzelleneinheit 1 hinreichend hochohmiges Wasser zuzuführen, da das Wasser im Gaserzeugungssystem 2 verdampft und dabei der Wasserdampf von elektrische Leitfähigkeit verursachenden Verunreinigungen getrennt wird, bevor dieses in die Brennstoffzelleneinheit 1 gelangt.

Die Ionentauscher-Einheit 3 ermöglicht gemäß der Erfindung den Betrieb des Brennstoffzellensystems mit einem hochreinen Wasser-Brennmittel-Gemisch, vorzugsweise Wasser-Methanol-Gemisch, und erlaubt so den Schutz der Komponenten des Gaserzeugungssystems 2 vor korrosiven Angriffen des Wasser-Methanol-Gemischs, insbesondere vor Chloriden, die in dem Gemisch gelöst sein können. Ebenso vorteilhaft ist, daß unerwünschte Ablagerungen und Kontamination der Katalysatoren im Gaserzeugungssystem 2 vermieden werden können. Gleichzeitig wird verhindert, daß Wasser bei niedrigen Umgebungstemperaturen im System ausfrieren kann, da Wasser stets im Gemisch vorliegt. Besonders bei der Verwendung eines Brennstoffzellensystems in einem Brennstoffzellenfahrzeug besteht die Gefahr, daß das Brennstoffzellensystem solchen niedrigen Umgebungstemperaturen ausgesetzt wird. Ist ein Ionentauscher im System vorgesehen, bereitet dies üblicherweise erhebliche Probleme, da Ionentauscher beim Ausfrieren von Wasser beschädigt und funktionsuntüchtig werden.

Gleichzeitig dient die Ionentauscher-Einheit 3 auch als Grobfilter des durchströmenden Gemischs. Stromab der Ionentauscher-Einheit 3 ist eine Dosierpumpe 7 angeordnet, welche das Wasser-Methanol-Gemisch über einen Feinfilter 4 dem Gaserzeugungssystem 2 zuführt. Dort wird Wasserstoff mittels einer Reformierungsreaktion gewonnen und dem Anodenraum der Brennstoffzelleneinheit zugeführt.

Das in der Brennstoffzelleneinheit erzeugte und/oder dem Brennstoffzellensystem zugeführte Wasser aus dem Kathoden- und oder Anodenabgas wird aus den entsprechenden Medienströmen zurückgewonnen, vorzugsweise mittels zumindest eines Kondensatabscheiders 6. In der Figur ist dies anhand eines Beispiels für den Kathodenabgasstrom gezeigt. Wasser wird aus dem Kathodenabgas der Brennstoffzelleneinheit 1 auskondensiert, in einem Sammelbehälter des Kondensatabscheiders 6 gesammelt und dem Reservoir 5 zugeführt.

Zweckmäßigerweise wird die Strömungsverbindung 8 zwischen dem Sammelbehälter des Kondensatabscheiders 6 und Reservoir 5 möglichst kurz gehalten, so daß bei niedrigen Umgebungstemperaturen kein Wasser in der dazwischen liegenden Leitung ausfrieren kann.

Es können Mittel vorgesehen sein, um Methanol aus einem Brennmitteltank dem Reservoir 5 und/oder stromauf und/oder stromab des Reservoirs 5 in den Strömungsweg des Gemischs zuzudosieren, so daß stets ein Wasser-Methanol-Gemisch, vorzugsweise mit einem definierten Gehalt an Methanol, vorhanden ist.

Eine weitere günstige, nicht dargestellte Einbauposition der Ionentauscher-Einheit 3 ist zwischen dem Kondensatabscheider 6 und dem Reservoir 5. Dies ist besonders günstig, da der im Abscheider 6 vorherrschende hohe Systemdruck zum Durchströmen der Ionentauscher-Einheit 3 ausgenutzt werden kann und gleichzeitig kein zusätzlicher Druckverlust auf der Saugseite der Dosierpumpe 7 verursacht wird. In diesem Fall ist eine Brennmittelzudosierung stromauf der Ionentauscher-Einheit 3 vorzusehen.

Ebenso ist es möglich, eine Vorförderpumpe vorzusehen, die das Gemisch im Reservoir 5 umwälzt und eine Ionentauscher-Einheit 3 in der Vorförderpumpenstrecke, bevorzugt auf der Druckseite der Vorförderpumpe, vorzusehen.

Ein besonders günstiger Einbauort für die Ionentauscher-Einheit 3 ist gemäß der Erfindung ein Bereich des Strömungswegs des Wasser/Brennmittelgemischs zwischen dem Kondensatabscheider 6 und dem Gaserzeugungssystem 2. Besonders günstig sind Bereiche mit einem Druckgefälle, wenn die Ionentauscher-Einheit 3 auf der Seite mit dem höheren Druck eingesetzt wird, besonders bevorzugt in einem Bereich, an dem ein gegenüber Atmosphärendruck erhöhter Druck herrscht. So ist es auch möglich, die Ionentauscher-Einheit 3 stromab der Dosierpumpe 7 vorzusehen.

Üblicherweise mischt sich Methanol nicht sehr gut mit Wasser. Die Ionentauscher-Einheit 3 sorgt jedoch für eine innige Durchmischung von Wasser und Methanol, so das das Gemisch sehr homogen aus der Ionentauscher-Einheit 3 austritt. Die Ionentauscher-Einheit 3 fungiert hier zusätzlich als bevorzugtes Mischerelement für Wasser und Brennmittel.

Die Reinigung des Wasser-Methanol-Gemischs sorgt auch für eine geringe elektrische Leitfähigkeit des Gemischs, so daß die Komponenten im Gaserzeugungssystem zusätzlich auch eine verbesserte elektrische Isolierung aufweisen.

## Patentansprüche

1. Brennstoffzellensystem mit einer Brennstoffzelleneinheit (1) mit mindestens einer Brennstoffzelle und einem Gaserzeugungssystem (2), welches zur Versorgung der Brennstoffzelleneinheit (1) mit Wasserstoff aus dem Brennmittel vorgesehen ist, sowie zumindest einer Ionentauscher-Einheit (3) zur Entfernung von Ionen aus Wasser,
**dadurch gekennzeichnet,**
**daß** die zumindest eine Ionentauscher-Einheit (3) in einem Strömungsweg (8) des Brennmittels zwischen einem Kondensatabscheider (6) und dem Gaserzeugungssystem (2) angeordnet und mit einem Gemisch von Wasser und dem Brennmittel beaufschlagt ist.

2. Brennstoffzellensystem nach Anspruch 1,
**dadurch gekennzeichnet,**
**daß** Mittel zum Zudosieren des Brennmittels in das Reservoir (5) und/oder in den Strömungsweg (8) des Gemischs aus Wasser und Brennmittel vorgesehen sind.

3. Brennstoffzellensystem nach Anspruch 1,
**dadurch gekennzeichnet,**
**daß** Mittel zum Zudosieren von Methanol in das Reservoir (5) und/oder in den Strömungsweg (8) des Gemischs aus Wasser und Methanol vorgesehen sind.

4. Brennstoffzellensystem nach Anspruch 1,
**dadurch gekennzeichnet,**
**daß** entlang eines Strömungswegs (8) des Gemischs aus Wasser und Brennmittel ein Sammelbehälter eines Kondensatabscheiders (6) zum Abscheiden von Wasser aus einem Fluid, anschließend ein Reservoir (5) mit einem Gemisch aus Wasser und dem Brennmittel, daran anschließend eine Ionentauscher-Einheit (3), daran anschließend eine Dosierpumpe (7), daran anschließend ein Partikelfilter (4) und daran anschließend ein Gaserzeugungssystem (2) angeordnet ist.

5. Brennstoffzellensystem nach Anspruch 1,
**dadurch gekennzeichnet,**
**daß** entlang eines Strömungswegs (8) des Gemischs aus Wasser und Brennmittel ein Sammelbehälter eines Kondensatabscheiders (6) zum Abscheiden von Wasser aus einem Fluid, anschließend eine Ionentauscher-Einheit (3), daran anschließend ein Reservoir (5) mit einem Gemisch aus Wasser und dem Brennmittel, daran anschließend eine Dosierpumpe (7), daran anschließend ein Partikelfilter (4) und daran anschließend ein Gaserzeugungssystem (2) angeordnet ist, wobei eine Zudosierung von Brennmittel stromauf der Ionentauscher-Einheit (3) vorgesehen ist.

6. Brennstoffzellensystem nach Anspruch 1,
**dadurch gekennzeichnet,**
**daß** entlang eines Strömungswegs (8) des Gemischs aus Wasser und Brennmittel ein Sammelbehälter eines Kondensatabscheiders (6) zum Abscheiden von Wasser aus einem Fluid, daran anschließend ein Reservoir (5) mit einem Gemisch aus Wasser und dem Brennmittel, daran anschließend eine Dosierpumpe (7), anschließend eine Ionentauscher-Einheit (3), daran anschließend ein Partikelfilter (4) und daran anschließend ein Gaserzeugungssystem (2) angeordnet ist.

7. Verfahren zum Betreiben eines Brennstoffzellensystems nach Anspruch 1,
**dadurch gekennzeichnet,**
**daß** der zumindest einen Ionentauscher-Einheit (3) ein Gemisch aus Wasser und einem Brennmittel zur Entfernung von Verunreinigungen aus dem Gemisch zugeführt wird.

8. Verfahren nach Anspruch 6,
**dadurch gekennzeichnet,**
**daß** das Gemisch aus Wasser und dem Brennmittel vor dem Eintritt des Gemischs in das Gaserzeugungssystem (2) durch die Ionentauscher-Einheit (3) gereinigt wird.

9. Verfahren nach Anspruch 6,
**dadurch gekennzeichnet,**
**daß** die Ionentauscher-Einheit (3) als Mischer von Wasser und dem Brennmittel verwendet wird.

10. Verfahren nach Anspruch 6,
**dadurch gekennzeichnet,**
**daß** Brennmittel in ein Reservoir (5) und/oder in einen Strömungsweg des Gemischs aus Wasser und Brennmittel zudosiert wird.

## Claims

1. Fuel cell system having a fuel cell unit (1) with at least one fuel cell and a gas generating system (2), which is provided in order to supply the fuel cell unit (1) with hydrogen from the fuel, and having at least one ion-exchanger unit (3) for removal of ions from water,
**characterized in that**
the at least one ion-exchanger unit (3) is arranged in a flow path (8) of the fuel between a condensate separator (6) and the gas generating system (2), and has a mixture of water and the fuel applied to it.

2. Fuel cell system according to Claim 1,
**characterized in that**
means are provided for metering of the fuel into the reservoir (5) and/or into the flow path (8) of the mixture of water and fuel.

3. Fuel cell system according to Claim 1,
**characterized in that**
means are provided for metering of methanol into the reservoir (5) and/or into the flow path (8) of the mixture of water and methanol.

4. Fuel cell system according to Claim 1,
**characterized in that**
a collecting container of a condensate separator (6) for separation of water from a fluid, followed by a reservoir (5) with a mixture of water and the fuel, which is followed by an ion-exchanger unit (3), then followed by a metering pump (7), then followed by a particle filter (4) and then followed by a gas generating system (2) are arranged along a flow path (8) for the mixture of water and fuel.

5. Fuel cell system according to Claim 1,
**characterized in that**
a collecting container of a condensate separator (6) for separation of water from a fluid, followed by an ion-exchanger unit (3), which is followed by a reservoir (5) with a mixture of water and the fuel, then followed by a metering pump (7), then followed by a particle filter (4) and then followed by a gas generating system (2) are arranged along a flow path (8) for the mixture of water and fuel, with metering of the fuel being provided upstream of the ion-exchanger unit (3).

6. Fuel cell system according to Claim 1,
**characterized in that**
a collecting container of a condensate separator (6) for separation of water from a fluid, which is followed by a reservoir (5) with a mixture of water and the fuel, then followed by a metering pump (7), then followed by an ion-exchanger unit (3), then followed by a particle filter (4) and then followed by a gas generating system (2) are arranged along a flow path (8) of the mixture of water and fuel.

7. Method for operation of a fuel cell system according to Claim 1,
**characterized in that**
the at least one ion-exchanger unit (3) is supplied with a mixture of water and of fuel in order to remove impurities from the mixture.

8. Method according to Claim 6,
**characterized in that**
the mixture of water and the fuel is cleaned by the ion-exchanger unit (3) before the mixture enters the gas generating system (2).

9. Method according to Claim 6,
**characterized in that**
the ion-exchanger unit (3) is used as a mixer for water and fuel.

10. Method according to Claim 6,
**characterized in that**
the fuel is metered into a reservoir (5) and/or into a flow path for the mixture of water and fuel.

## Revendications

1. Système de cellules à combustible, qui présente une unité (1) de cellules à combustible qui compte au moins une cellule à combustible, un système (2) de création de gaz qui est prévu pour alimenter l'unité (1) de cellules à combustible en hydrogène provenant d'un combustible ainsi qu'au moins une unité (3) d'échange d'ions qui sépare les ions de l'eau,
**caractérisé en ce que**
la ou les unités (3) d'échange d'ions sont disposées dans un parcours d'écoulement (8) du combustible entre un séparateur de condensat (6) et le système (2) de création de gaz et sont alimentées en un mélange constitué d'eau et du combustible.

2. Système de cellules à combustible selon la revendication 1, **caractérisé en ce que** des moyens sont prévus pour ajouter le combustible dans le réservoir (5) et/ou dans le parcours d'écoulement (8) du mélange d'eau et de combustible.

3. Système de cellules à combustible selon la revendication 1, **caractérisé en ce que** des moyens sont prévus pour ajouter du méthanol dans le réservoir (5) et/ou dans le parcours d'écoulement (8) du mélange d'eau et de méthanol.

4. Système de cellules à combustible selon la revendication 1, **caractérisé en ce que** le long d'un parcours d'écoulement (8) du mélange d'eau et de combustible sont disposés un récipient de collecte d'un séparateur de condensat (6) qui sépare l'eau d'un fluide, suivi par un réservoir (5) qui contient un mélange constitué d'eau et du combustible, suivi par une unité (3) d'échange d'ions à laquelle se raccorde une pompe de dosage (7) à laquelle se raccorde un filtre à particules (4) suivi par un système (2) de création de gaz.

5. Système de cellules à combustible selon la revendication 1, **caractérisé en ce que** le long d'un parcours d'écoulement (8) du mélange d'eau et de combustible sont disposés un récipient de collecte d'un séparateur de condensat (6) qui sépare l'eau d'un fluide, suivi par une unité (3) d'échange d'ions, suivie par un réservoir (5) qui contient un mélange constitué d'eau et du combustible, suivi par une pompe de dosage (7) à laquelle se raccorde un filtre à particules (4) suivi par un système (2) de création de gaz, l'ajout de combustible étant prévu en amont de l'unité (3) d'échange d'ions.

6. Système de cellules à combustible selon la revendication 1, **caractérisé en ce que** le long d'un parcours d'écoulement (8) du mélange d'eau et de combustible sont disposés un récipient de collecte d'un séparateur de condensat (6) qui sépare l'eau d'un fluide, suivi par un réservoir (5) qui contient un mélange constitué d'eau et du combustible, suivi par une pompe de dosage (7), suivie par une unité (3) d'échange d'ions à laquelle se raccorde un filtre à particules (4) suivi par un système (2) de création de gaz.

7. Procédé d'utilisation d'un système de cellules à combustible selon la revendication 1, **caractérisé en ce qu'**un mélange constitué d'eau et d'un combustible est apporté à la ou aux unités (3) d'échange d'ions pour éliminer les impuretés du mélange.

8. Procédé selon la revendication 6, **caractérisé en ce qu'**avant que le mélange constitué d'eau et du combustible pénètre dans le système (2) de création de gaz, le mélange est purifié par l'unité (3) d'échange d'ions.

9. Procédé selon la revendication 6, **caractérisé en ce que** l'unité (3) d'échange d'ions est utilisée pour mélanger l'eau et le combustible.

10. Procédé selon la revendication 6, **caractérisé en ce que** du combustible est ajouté dans un réservoir (5) et/ou dans un parcours d'écoulement du mélange d'eau et de combustible.
